# EUROPEAN PATENT APPLICATION

(11) **EP 1 947 025 A1**
(43) Date of publication of application: **23.07.2008**
(21) Application number: 07123954.5
(22) Date of filing: 21.12.2007
(51) Int. Cl.: B65D 63/08

(54) **Reusable tie for fastening different elements**

(30) Priority: 29.12.2006 ES 200602827 U
(71) Applicant: Termes Adria, Salvador, 08770 Sant Sadurni d'Anoia (ES); Dominguez Ballesteros, Juan Carlos, 08770 Sant Sadurni d'Anoia (ES); Dominguez Ballesteros, Francisca, 08770 Sant Sadurni d'Anoia (ES)
(72) Inventor: Termes Adria, Salvador, 08770 Sant Sadurni d'Anoia (ES); Dominguez Ballesteros, Juan Carlos, 08770 Sant Sadurni d'Anoia (ES); Dominguez Ballesteros, Francisca, 08770 Sant Sadurni d'Anoia (ES)
(74) Representative: Pons Arino, Angel

(57) **Abstract**

Reusable tie for fastening different elements, that comprises a flexible toothed strap (1) equipped with a locking head (2,3) through which the opposite end of the strap is inserted and a locking pawl (6) which engages the teeth (4) on the side edge of the strap; the locking head (2,3) comprises a release mechanism that unlocks the locking pawl (6) to release the toothed strap.

## Description

### OBJECT OF THE INVENTION

The present utility model relates to a tie for temporarily fastening and joining two or more elements, of the type that comprises a flexible toothed strap with a locking head into which the opposite end of the strap is inserted.

The tie that is the object of the invention is specially designed to be reused after its initial application, thanks to a release mechanism that unlocks the toothed strap in a fast and simple manner.

### BACKGROUND OF THE INVENTION

There are currently ties available on the market that comprise a toothed strip with a locking head in a single injected plastic piece, into the head of which the opposite end of the strip is inserted to close the tie and trap or grip two or more elements therein to join or secure them. Said head has a pawl that engages the teeth of the strip to prevent their backwards movement. Thus, once the toothed strip is gripped, the elements or pieces contained inside its contour are secured together, or to a third fastening element.

Ties of this type are widely used for many applications, thanks to their quick and easy application. They are used, for instance, in the construction sector, in electrical installations to bundle and secure cables, for household applications, to join and secure fences, signs, etc.

However, the disadvantage of this type of ties is that once installed, they cannot be used again, i.e. they are single-use devices. After their initial application, in order to separate or remove the secured elements it is necessary to cut the tie, thereby preventing it from being reused.

Another disadvantage is that their clamping and tensile stress capacity is very limited as they are made from plastic.

### DESCRIPTION OF THE INVENTION

The reusable tie for fastening different elements proposed by the invention overcomes the aforementioned problems, as it has a release mechanism that unlocks the toothed fastening strap for its subsequent reuse.

To do this, and more specifically, the reusable tie is of the type that comprises a flexible toothed strap equipped with a locking head through which the opposite end of the strap is inserted, the locking head of which comprises a release mechanism that unlocks the locking pawl to release the toothed strap, and the locking pawl of which engages the teeth on the side edge of the strap.

The locking pawl comprises a metal piece, the outside of which is joined to the locking head by one end whilst the other end is free to bend, the free end having a transversal tab ending in a plurality of teeth that is inserted through a window in the locking head in a position that coincides with the path of the lateral teeth on the toothed fastening strap, which it engages and locks.

The release mechanism that unlocks the locking pawl comprises an articulated lever on the locking head, which has a lateral tab with a protuberance that coincides with the free end of the locking pawl and which penetrates between the locking pawl and the wall of the locking head, moving it outwards to release the toothed fastening strap.

In order to prevent the tie from unauthorized opening the release lever can be removable from the locking head. Thus, the tie may only be opened by authorised personnel who have the release lever, positioning it and pressing it on the locking head to move the locking pawl outwards.

In order to help tighten the tie, the free end of the toothed fastening strap has a hole into which a pin is inserted.

### DESCRIPTION OF THE DRAWINGS

To complement this description and in order to aid a better understanding of the invention's characteristics, according to a preferred practical embodiment thereof, there is a set of illustrative and non-limiting drawings integral to said description, which are as follows:

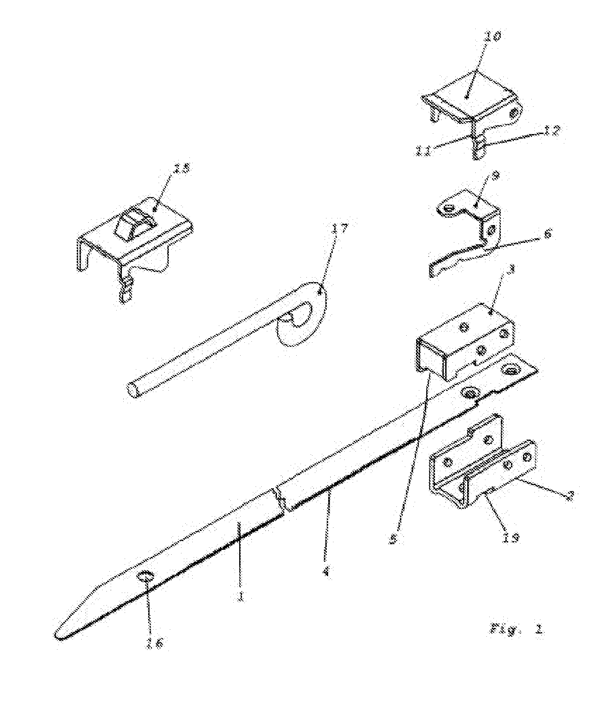

Figure 1 shows an exploded perspective view of the tie wherein all its components can be seen.

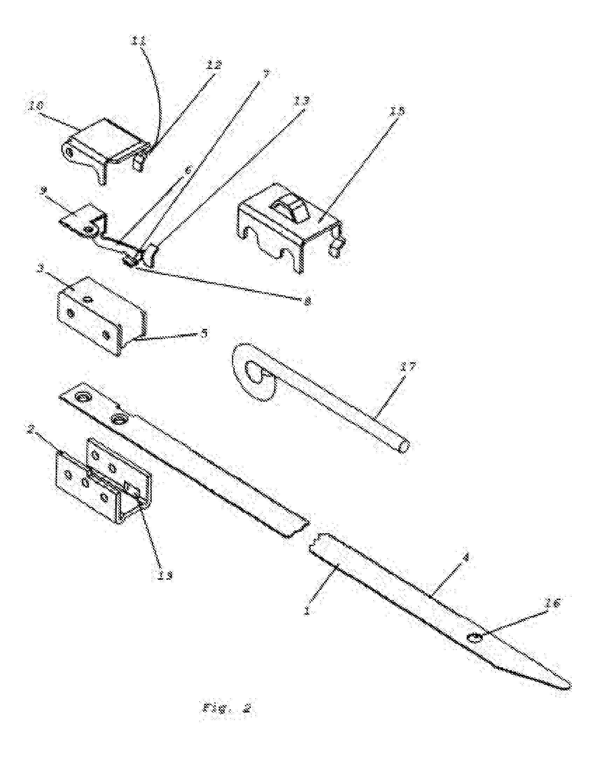

Figure 2 also shows an exploded perspective view from the left-hand side.
Figure 3 shows a front view of the locking head wherein the release mechanism can be seen.
Figure 4 shows a front view of the locking head.
Figure 5 shows a front view of the locking head with the removable lever in its two positions.

### PREFERRED EMBODIMENT OF THE INVENTION

In view of the aforementioned figures, it can be seen how the reusable tie is of the type that comprises a flexible toothed strap 1, one end of which has a locking head consisting of the support 2 and cover 3, through which the opposite end of the strap 1 is inserted.

The strap 1 is made from metal and is flexible so that it may be easily adapted to the contour of the elements to be joined or secured, and it is provided with teeth 4 on one of its side edges. Said teeth 4 are situated on the side edge of the fastening strap 1 to provide the fastening with greater rigidity, preventing the teeth from becoming deformed and keeping the clamping force constant. The teeth are designed in such a way that the fastening strap 1 can be easily handled without any risk, regardless of its geometric form.

The locking head is mounted on one of the ends of the fastening strap 1 and it comprises the support 2, which is a U-shaped piece inside which the end of the strap 1 is secured by riveting, screws or welding. Once the end of the strap 1 has been secured to the support 2, the head is closed by the cover 3, which is a metal box that is secured to the support 2 by riveting, screws or welding, forming a compact rigid block. The end walls of said box have notches 5 that, once the locking head has been assembled, define openings through which the free end of the strap 1 can pass. Thus, by inserting the free end of the strap 1 into the locking head through the openings 5 and pulling thereon, we tighten the strap 1 until the different elements contained inside its contour are joined or secured. The size of the openings 5 is adapted to fit the section of the fastening strap 1 to prevent it from moving laterally when it comes into contact with the locking pawl, thus ensuring that it does not lose clamping force.

So that the fastening strap 1 does not slacken and to keep it tight in the working position, the locking head has a locking pawl 6 consisting of a metal piece, the outside of which is joined by one end to the support 2 that forms the locking head, and the opposite end is free to bend. The locking pawl 6 is secured by riveting, screws or welding. In order to ensure the rigidity of said joint, the metal piece has an upper tab 9 that is mounted on the cover 3 of the locking head, which is designed to receive a second connection point by riveting, screws or welding.

The free end of the locking pawl has a transversal tab 7 that ends in a plurality of teeth 8, which is inserted through a window 19 in the locking head situated in a position that coincides with the path of the lateral teeth of the fastening strap 1. In the working position the teeth 8 of the transversal tab engage the lateral teeth of the fastening strap 1. The teeth of the fastening strap 1 slant backwards to enable them to move forwards through the locking head and to prevent their backward movement when the teeth 4 engage the teeth 8 of the transversal tab 7.

In order to release the fastening strap 1 and open the tie, the locking head has a release mechanism that unlocks the locking pawl 6, consisting of an articulated lever 10 on the locking head, which has a lateral tab 11 with a protuberance 12 that coincides with the free end of the locking pawl 6 and which penetrates between the locking pawl and the wall of the locking head, moving it outwards to release the toothed fastening strap 1. As the locking pawl 6 moves outwards, the teeth 8 are separated from the teeth 4 of the fastening strap 1, thus allowing it to move backwards. To aid the penetration of the lateral tab 11 between the wall of the locking head and the locking pawl, its free end has an outward-slanting section 13. Thus, by pressing the articulated lever 10 we separate the teeth 8 from the teeth 4 of the fastening strap 1 to enable its free movement through the locking head. The lever 10 is articulated to the locking head by two lateral rivets 14 on which it is hinged.

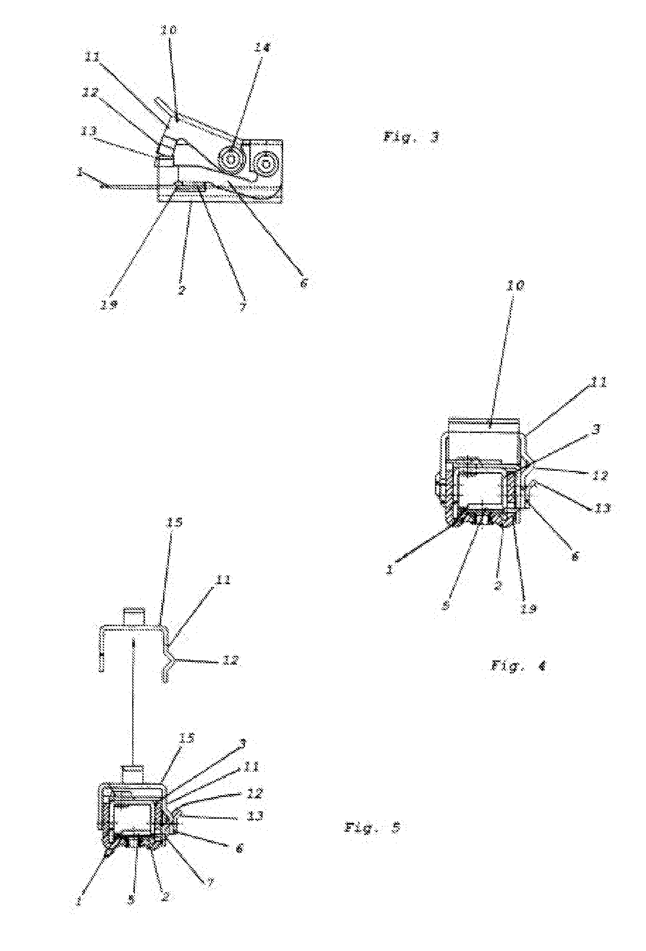

In order to prevent the tie from unauthorized opening the release lever can be removable from the locking head. In this case, as can be seen in figure 5, the lever takes the form of a bridge-shaped piece 15 that fits over the locking head, which also has a lateral tab 11 and protuberance 12 with the same function. Thus, the tie may only be opened by authorised personnel who have the release piece 15, positioning it and pressing it on the locking head to move the locking pawl 6 outwards.

Finally, to help tighten the tie, the free end of the toothed fastening strap 1 has a hole 16 into which a pin 17 is inserted. Thus, by inserting the pin 17 into the hole 16 it is easier and more convenient to tighten the tie.

Having sufficiently described the nature of the invention and its practical embodiment, it must be stated that the aforementioned arrangements, which are shown in the attached drawings, may be subject to modifications, provided that they do not alter its fundamental principle.

## Claims

1. Reusable tie for fastening different elements, of the type that comprises a flexible toothed strap equipped with a locking head through which the opposite end of the strap is inserted, **characterised in that** the locking head comprises a release mechanism that unlocks the locking pawl to release the toothed strap, and the locking pawl of which engages the teeth on the side edge of the strap.

2. Reusable tie, according claim 1, **characterised in that** the locking pawl comprises a metal piece, the outside of which is joined to the locking head by one end whilst the other end is free to bend, the free end having a transversal tab ending in a plurality of teeth that is inserted through a window in the locking head in a position that coincides with the path of the lateral teeth of the toothed fastening strap.

3. Reusable tie, according to claim 1, **characterised in that** the release mechanism that unlocks the locking pawl comprises an articulated lever on the locking head, which has a lateral tab with a protuberance that coincides with the free end of the locking pawl and which penetrates between the locking pawl and the wall of the locking head, moving it outwards to release the toothed fastening strap.

4. Reusable tie, according to claim 3, **characterised in that** the release lever can be removable from the locking head to prevent it from unauthorized opening.

5. Reusable tie, according to claim 1, **characterised in that** the free end of the toothed fastening strap has a hole into which a pin is inserted to help tighten the tie.
